(19) Europäisches Patentamt
European Patent Office
Office européen des brevets

(11) **EP 2 544 941 B1**

(12) **EUROPÄISCHE PATENTSCHRIFT**

(45) Veröffentlichungstag und Bekanntmachung des Hinweises auf die Patenterteilung:
**10.09.2014 Patentblatt 2014/37**

(51) Int Cl.:
*B60W 10/20* (2006.01)     *B60W 30/12* (2006.01)
*B62D 15/02* (2006.01)     *G08G 1/16* (2006.01)

(21) Anmeldenummer: **11726044.8**

(22) Anmeldetag: **02.03.2011**

(86) Internationale Anmeldenummer:
**PCT/DE2011/000205**

(87) Internationale Veröffentlichungsnummer:
**WO 2011/110156 (15.09.2011 Gazette 2011/37)**

(54) **SPURHALTESYSTEM FÜR EIN KRAFTFAHRZEUG**

LANE KEEPING SYSTEM FOR A MOTOR VEHICLE

SYSTÈME DE MAINTIEN DE TRAJECTOIRE POUR UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.05.2010 DE 102010019418
06.03.2010 DE 102010010489**

(43) Veröffentlichungstag der Anmeldung:
**16.01.2013 Patentblatt 2013/03**

(73) Patentinhaber: **Continental Teves AG & Co. oHG
60488 Frankfurt (DE)**

(72) Erfinder:
• **STRAUSS, Matthias
64319 Pfungstadt (DE)**
• **WALDBAUER, Dirk
65817 Eppstein (DE)**
• **LÜKE, Stefan
57462 Olpe (DE)**
• **BERTHOLD, Thomas
64285 Darmstadt (DE)**

(56) Entgegenhaltungen:
**EP-A1- 2 149 487       EP-A2- 1 653 310
DE-A1- 19 830 548      DE-A1-102007 027 495
US-A1- 2005 228 588    US-A1- 2007 225 914**

**Beschreibung**

Die Erfindung betrifft ein Spurhaltesystem für ein Kraftfahrzeug gemäß Oberbegriff des Patentanspruchs 1.

Ein solches Spurhaltesystem ist bspw. aus der gattungsbildenden DE 101 37 292 A1 bekannt, das aus einer CCD-Kamera zur Erfassung des Fahrzeugumfeldes, insbesondere zur Erfassung des Fahrbahnverlaufs und des Fahrzeugkurses und einer elektrischen Servolenkung, die eine Lenkassistenzfunktion zur Spurführung umfasst, besteht. Aus dem Fahrbahnverlauf werden eine Sollbahn und ein Sollbahnwinkel ermittelt, aus dem Fahrzeugkurs eine Istbahn und ein Istbahnwinkel, wobei die Sollbahn und der Sollbahnwinkel mit der Istbahn und dem Istbahnwinkel verglichen werden und hieraus nach Maßgabe des Vergleichs ein Lenkmoment erzeugt wird, das dem von dem Fahrer aufgebrachten Handmoment überlagert wird.

Die Offenlegungsschrift US2005/0228588 A1 ist als nächstliegender Stand der Technik zu sehen und gibt ebenfalls ein Spurhaltesystem für ein Kraftfahrzeug an. Fahrzeuge auf benachbarten Fahrbahnen werden mit einem Umfeldsensor z.B. einer Kamera erkannt und es wird ein Mindestabstand zu diesen Fahrzeugen eingehalten, so dass die Fahrspur des Egofahrzeugs sowohl von der Begrenzungen der Fahrspur (i.d.R. Markierungen) als auch den Fahrzeugen auf den benachbarten Fahrspuren abhängt.

Nachteilig bei den bekannten Spurhaltesystem ist jedoch, dass die Momentenaufschaltung auf die Lenkung zur Unterstützung des Fahrers bei der Spurführung des Fahrzeugs nicht hinsichtlich der baulichen Umgebung des Fahrzeugs differenziert wird, also bspw. nicht unterschieden wird, ob eine Fahrspur durch eine Fahrbahnmarkierung begrenzt wird oder durch eine Betonwand, bspw. in einem Baustellenbereich, die sogar evtl. zusätzlich zu solchen Fahrbahnmarkierungen vorhanden sein kann.

Aufgabe der Erfindung ist es daher, ein gegenüber dem bekannten Spurhaltesystem der eingangs genannten Art ein verbessertes Spurhaltesystem anzugeben, welches den Fahrer hinsichtlich der Umgebungssituation des Fahrzeugs differenziert zur Spurhaltung unterstützt.

Diese Aufgabe wird gelöst durch ein Spurhaltesystem mit den Merkmalen des Patentanspruchs 1.

Bei einem solchen erfindungsgemäßen Spurhaltesystem ist vorgesehen, dass

- das Fahrspurerfassungssystem zum Erfassen von Fahrbahnrand- und Fahrspurmarkierungen, von Fahrbahnränder, von Objekten, insbesondere bauliche Begrenzungen im Bereich des Fahrbahnrandes und/oder des Fahrspurrandes und von Fahrzeugen auf Nachbarfahrspuren der von dem Fahrzeug befahrenen Fahrspur ausgebildet ist,
- die Steuereinrichtung Vorausschaupunkte auf der Fahrzeugtrajektorie erzeugt und in Abhängigkeit der die Umgebungssituation im Bereich der Vorausschaupunkte spezifizierenden Objekte hinsichtlich Fahrbahnrand- und Fahrspurmarkierungen, Fahrbahnränder, Objekte, insbesondere bauliche Begrenzungen im Bereich des Fahrbahnrandes und/oder des Fahrspurrandes und Fahrzeugen auf Nachbarfahrspuren der von dem Fahrzeug befahrenen Fahrspur Schwellwerte bestimmt,
- die Steuereinrichtung einen prädizierten Abstand bestimmt, der den Abstand des Fahrzeugs in dem Vorausschaupunkt auf der Fahrzeugtrajektorie von dem die Umgebungssituation im Vorausschaupunkt spezifizierenden Objekt angibt,
- die Steuereinrichtung zur Erzeugung eines Eingriffsabstandes den Schwellwert in Abhängigkeit des prädizierten Abstands erniedrigt oder erhöht, und
- bei Unterschreiten des Eingriffsabstandes durch den seitlichen Abstand des Fahrzeugs zu dem die Umgebungssituation spezifizierenden Objekt das Lenksystem mit einem Lenkmoment beaufschlagt wird, wobei die Eingriffstärke von dem seitlichen Abstand des Fahrzeugs zu dem die Umgebungssituation spezifizierenden Objekt abhängt.

Das erfindungsgemäße Spurhaltesystem weist demnach den Vorteil auf, dass eine differenzierte Umgebungssituation des Fahrzeugs als Grundlage eines Momenteneingriffs dient. Diese Differenzierung der Umgebungssituation erfolgt hinsichtlich Fahrbahnrand- und Fahrspurmarkierungen, Fahrbahnränder, und den Fahrbahnrand bildende bauliche Begrenzungen.

Damit werden nicht nur Fahrspur- oder Fahrbahnmarkierungen erfasst und zur Grundlage des Momenteneingriffs in die Lenkung des Fahrzeugs gemacht, sondern auch den Fahrbahnrand bildende bauliche Begrenzungen, also Bordsteine, Leitplanken oder Betonwände. Dies ist insbesondere auch dann vorteilhaft, wenn die üblichen Fahrspur- oder Fahrbahnmarkierungen nicht vorhanden sind.

Mit der prädizierten Fahrzeugtrajektorie wird der Schwellwert als Eingriffsabstand für den Momenteneingriff dynamisch an diese die Umgebungssituation, also die Begrenzungssituation der Fahrbahn oder der Fahrspur in einem bestimmten Vorausschaupunkt spezifizierenden Objekte angepasst. Erfindungsgemäß ist bei einer Baustellenwand der Eingriffsabstand höher angesetzt als bei einer üblichen Spurmarkierung.

Dieser Eingriffsabstand wird erfindungsgemäß dynamisch an den prädizierten Abstand angepasst.

Wenn gemäß einer vorteilhaften Weiterbildung der Erfindung mittels der prädizierten Fahrzeugtrajektorie detektiert wird, dass sich das Fahrzeug voraussichtlich von dem die Begrenzung darstellenden spezifischen Objekt wegbewegt oder sich diesem nähert, d. h. der prädizierte Abstand wird größer bzw. kleiner, wird der Eingriffsabstand reduziert bzw. erhöht, was zur Folge hat, dass sich der Momenteneingriff verzögert bzw. frühzeitiger erfolgt.

Eine besonders vorteilhafte Ausgestaltung der Erfindung sieht vor, dass die Eingriffstärke des Lenkmoments von dem die Umgebungssituation, also die Begrenzungssituation der Fahrbahn oder der Fahrspur im Vorausschaupunkt spezifizierenden Objekt abhängt. So erfolgt beispielsweise an einer Spurmarkierung auf einer Fahrbahn ein geringerer Eingriff als an einer eine Begrenzung darstellende Baustellenwand, die als die Umgebungssituation in dem bestimmten Vorausschaupunkt spezifizierendes Objekt erfasst wurde.

Desweiteren ist es vorteilhaft, wenn die Vorausschaupunkte nicht mit einer festen Entfernung vor dem Fahrzeug bestimmt werden, sondern in Abhängigkeit der Fahrzeuggeschwindigkeit gewählt werden oder ein Ort auf der Fahrzeugtrajektorie bestimmt wird, der in einer vorgegebenen Zeitdauer von dem Fahrzeug erreicht sein wird.

Eine andere vorteilhafte Ausgestaltung der Erfindung sieht vor, dass die die Umgebungssituation im Vorausschaupunkt spezifizierenden Objekte hinsichtlich ihrer Kritikalität klassifiziert werden, so dass bei mehreren solchen erfassten Objekten dasjenige mit der höchsten Kritikalität zur Bestimmung des Schwellwertes verwendet wird.

Vorzugsweise wird gemäß einer Weiterbildung der Erfindung das Lenksystem des Fahrzeugs so lange mit dem Lenkmoment beaufschlagt, bis der Abstand des Fahrzeugs zu dem die Umgebungssituation im Vorausschaupunkt spezifizierenden Objekt den aktuell bestimmten Eingriffsabstand überschreitet.

Gemäß einer anderen vorteilhaften Ausgestaltung der Erfindung wird bei einer Kurve einer vor dem Fahrzeug liegenden Fahrspur das vom Fahrer des Fahrzeugs zum Befahren dieser Kurve aufzubringende Lenkmoment von dem Lenkmoment abgezogen, mit dem die Lenkung des Fahrzeugs beaufschlagt wird. Damit ist es einem Fahrer möglich, Kurven zu schneiden, ohne durch einen unnötigen Lenkeingriff gestört zu werden, da beim Fahren an der Innenseite der Kurve der Fahrer lediglich ein leicht erhöhtes Gegenmoment am Lenkrad spürt, wobei beim Überfahren der kurvenäußeren Spur ein entsprechend höheres Gegenmoment erzeugt wird, um das Fahrzeug sicher in der Spur zu halten.

Vorzugsweise kann bei einer Kurve einer vor dem Fahrzeug liegenden Fahrspur der Schwellwert in Richtung der Außenseite der Kurve abgesenkt werden, bspw. wenn eine Einfahrt in eine Kurve erkannt wird. Hierdurch ergibt sich in der Kurve ein Freiraum für den Fahrer, da der Momenteneingriff nach außen in der Kurve verlagert wird, bspw. bei einer Linkskurve nach rechts außen.

Gemäß einer weiteren Ausgestaltung der Erfindung ist vorgesehen, dass

- das Spurhaltesystem bildgebende Sensoren zur Erfassung der die Umgebungssituation im Vorausschaupunkt spezifizierenden Objekt aufweist, und
- die Eingriffsstärke des Lenkmoments von der Verlässlichkeit der Bilddaten der bildgebenden Sensoren abhängt.

Dabei wird vorzugsweise die Verlässlichkeit der Bilddaten in Abhängigkeit der Lebensdauer der die Umgebungssituation im Vorausschaupunkt spezifizierenden Objekte und/oder der Varianz der Bilddaten solcher Objekte bestimmt.

Damit kann insbesondere bei einer hohen Verlässlichkeit der Sensordaten der Momenteneingriff stärker erfolgen als bei einer niedrigen Verlässlichkeit.

Zur Bestimmung der Fahrzeugtrajektorie hat es sich bewährt, als Bewegungsgröße des Fahrzeugs den Lenkwinkel zu verwenden.

Vorzugsweise kann zur Stabilisierung der Fahrzeugtrajektorie als Bewegungsgröße des Fahrzeugs zusätzlich die Querbeschleunigung und/oder die Raddrehzahlen und/oder die Sensorsignale eines Gierratensensors verwendet werden.

Die Erfindung wird nachfolgend unter Bezugnahme auf die beigefügten Figuren näher erläutert. Es zeigen:

Figur 1    eine schematische Darstellung eines Fahrbahnabschnittes mit einer Fahrzeugtrajektorie eines Fahrzeugs,

Figur 2    ein schematisches Blockschaltbild als Ausführungsbeispiel des erfindungsgemäßen Spurhaltesystems,

Figur 3a    eine schematische Darstellung eines Fahrbahnabschnittes mit an verschiedene Fahrzeugtrajektorien dynamisch angepassten Eingriffsabstände, und

Figur 3b    eine schematische Darstellung von an die Eingriffsabstände gemäß Figur 2a angepassten Momentenverläufe.

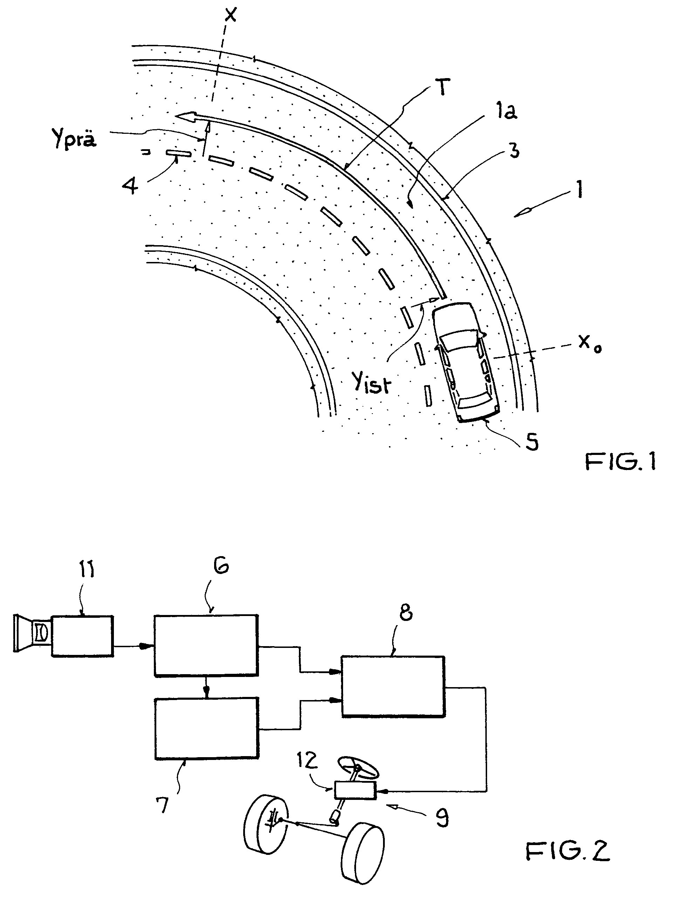

Figur 1 zeigt eine zweispurige Fahrbahn 1 mit einem Fahrzeug 5, das sich auf einer Fahrspur 1a in einer Kurve bewegt. Die Fahrspur 1a wird nach rechts durch eine Fahrspurbegrenzung, hier ein Randstreifen 3 und nach links durch einen Mittelstreifen 4 als weitere Fahrspurmarkierung begrenzt.

Das Fahrzeug ist mit einem gemäß Figur 2 ausgebildeten Spurhaltesystem ausgestattet. Mit einer Kamera 11 als bildgebenden Sensor wird die Umgebung des Fahrzeugs, insbesondere die vor ihm liegende Fahrbahn 1 erfasst und die Bilddaten in einem Fahrspurerfassungssystem 6 verarbeitet, indem im Sinne einer Fahrspurerkennung der weitere Verlauf der Fahrspur 1a ermittelt wird und die Abstände zu den beiden Fahrspurmarkierungen 3 und 4 rechts und links der Fahrspur 1a ermittelt werden.

Dieses Fahrspurerfassungssystem 6 ist derart ausgebildet, dass es nicht nur die auf der Fahrbahn 1 oder der Fahrspur 1a sichtbaren Markierungen 3 oder 4 erkennt, sondern alle die Umgebungssituation, also die Art der Begrenzung der Fahrbahn 1 oder Fahrspur 1a spezifizierenden Objekte, also Fahrbahnrand- und Fahrspurmarkierungen, Fahrbahnränder, Objekte, insbesondere bauliche Begrenzungen im Bereich des Fahrbahnrandes und/oder des Fahrspurrandes und Fahrzeuge auf Nachbarfahrspuren der von dem Fahrzeug befahrenen Fahrspur, wobei als bauliche Begrenzungen vor allem Bordsteine, Leitplanken oder Betonwände und dgl. relevant sind.

Zur Ermittlung des weiteren Verlaufs der Fahrspur 1a sind verschiedene Verfahren aus dem Stand der Technik bekannt.

Dies ist bspw. mittels Stützpunkten möglich, die im vorderen Bereich des Fahrzeugs mit einem festen oder geschwindigkeitsabhängigen Abstand vorgegeben werden und die abhängig vom Spurverlauf unterschiedliche Ablagen in Querrichtung haben.

Ein anderes bekanntes Verfahren wendet das aus dem Straßenbau bekannte Klothoidenmodel an. Aus dem zuletzt genannten Verfahren kann ein linearisiertes Klothoidenmodel abgeleitet werden, das einem Polynom entspricht. Da diese Verfahren bzw. diese Modelle im Stand der Technik hinlänglich bekannt sind, wird auf die Darstellung derselben verzichtet.

Das Spurhaltesystem gemäß Figur 2 umfasst ferner ein dem Fahrspurerfassungssystem 6 nachgeschaltetes Fahrzeugpositionsbestimmungssystem 7 zur Bestimmung der in Figur 1 dargestellten Fahrzeugtrajektorie T des Fahrzeugs 5 mittels dessen Lenkwinkel. Eine solche Fahrzeugtrajektorie T entspricht natürlich dem Kurvenabschnitt des in Figur 1 dargestellten Fahrbahnabschnittes 1.

Anhand der auf der Basis des linearisierten Klothoidenmodells bestimmten Fahrzeugtrajektorie T wird für einen Vorausschaupunkt x auf dieser Fahrzeugtrajektorie T, der also einige Meter vor dem Fahrzeug 5 liegt, der Abstand zu der detektierten linken Spurmarkierung 4, also der Mittellinie der Fahrbahn 1, im Folgenden prädizierter Abstand $y_{prä}$ genannt, gemäß folgender Formel berechnet, und zwar ausgehend von dem aktuellen

Abstand $y_{ist}$ zwischen dem Fahrzeugs 5 am aktuellen Ort $x_0$ und dieser Mittellinie 4:

$$y_{prä} = Y_{ist} + \Phi_0 + \tfrac{1}{2} * c_0 * x^2 + 1/6 * c_1 * x^3 - \tfrac{1}{2} * (\psi / (2*WBF*i_L)) * x^2$$

mit

$y_{prä}$ = Abstand des Fahrzeugs 5 von der Spurmarkierung 4 im Vorausschaupunkt x,
$y_{ist}$ = Abstand des Fahrzeugs 5 von der Spurmarkierung 4 in der aktuellen Position $x_0$,
x = Abstand des Vorausschaupunktes x von dem Fahrzeug 5
$\Phi_0$ = Winkel der Fahrspur 1a zu dem Fahrzeug 5
$C_0$ = Krümmung der Fahrspur 1a
$c_l$ = Krümmungsänderung der Fahrspur 1a
$\psi$ = Lenkradwinkel
$i_L$ = Lenkübersetzung
$WB_F$ = Abstand Vorder-Hinterachse des Fahrzeugs 5

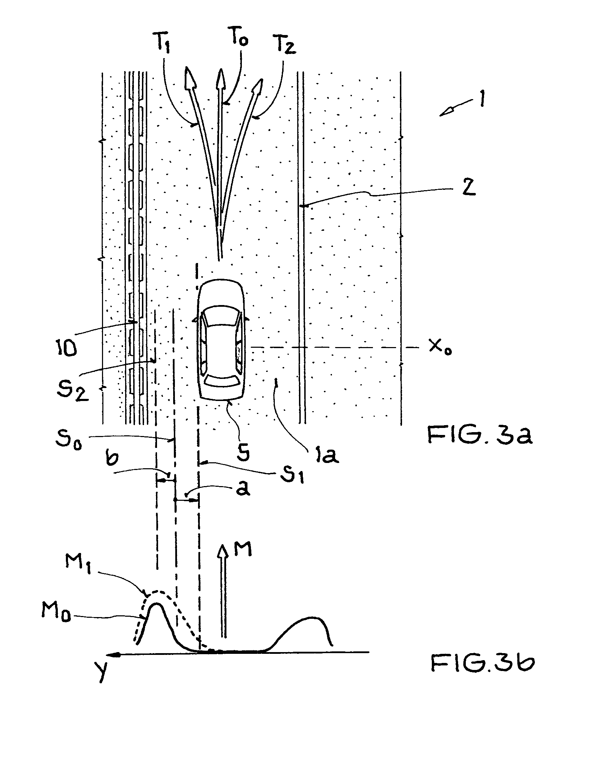

Diese prädizierte Fahrzeugtrajektorie T und die zugehörigen Vorausschaupunkte x werden benutzt, um Eingriffsabstände zu bestimmen, die bei Unterschreitung durch den Abstand des Fahrzeugs 5 von einem den Fahrbahnrand oder die Fahrspur begrenzenden Objekt, das in Figur 3a bspw. eine Baustellenwand oder eine Betonwand 10 darstellt, die die linke Seite einer Fahrspur 1a einer zweispurigen Fahrbahn 1 begrenzt, zu einem Momenteneingriff in das Lenksystem 9 des Fahrzeugs 5 führt. Das Fahrzeug 5 bewegt sich auf dieser Fahrspur 1a, die von der rechts verlaufenden Fahrspur durch eine durchgezogene Mittellinie 2 begrenzt wird.

In Abhängigkeit des die Fahrbahn 1 oder die Fahrspur 1a begrenzenden Objekts, also gemäß Figur 3a die Betonwand 10, wird ein von einer dem Fahrspurerfassungssystem 6 und dem Fahrzeugpositionsbestimmungssystem 7 nachgeschalteten Steuereinheit 8 ein Schwellwert S bestimmt, der als Eingriffsabstand $S_0$ den Abstand zu der Betonwand 10 angibt, der bei Unterschreitung durch den Abstand des Fahrzeugs 5 zu einer Momentenaufschaltung gemäß der Kurve $M_0$ von Figur 3b auf das Lenksystem 9 des Fahrzeugs 5 führt, um den Fahrer zu veranlassen, den Abstand des Fahrzeugs 5 zu der Betonwand zu vergrößern. Der Momentenverlauf gemäß Kurve $M_0$ ist nicht symmetrisch bzgl. den Fahrspurrändern der Fahrspur 1a, da die Betonwand 10 hinsichtlich ihres Gefährdungspotentials höher eingestuft wird als die die rechte Seite der Fahrspur 1a begrenzende Mittellinie 2. Daher nimmt die Eingriffsstärke des aufgeprägten Lenkmoments mit abnehmendem Abstand zur Betonwand 10 hin stärker zu als bei einem abnehmenden Abstand zur Mittellinie 2 hin.

Das Fahrzeug 5 gemäß Figur 3a bewegt sich auf einer Fahrzeugtrajektorie $T_0$, bei der der seitliche Abstand von der Betonwand 10 genügend groß ist, infolgedessen kein Eingriff erfolgt, also das Lenksystem 9 mit keinem Lenkmoment beaufschlagt wird. Dieser Zustand bleibt so lange, wie sich das Fahrzeug bei einem Abstand entsprechend der aktuellen Position $x_0$ parallel zu dieser Betonwand 10 bewegt. Dabei ist der Eingriffsabstand $S_0$ so bestimmt, dass sich das Fahrzeug 5 in einem Fahrschlauch bewegen kann, ohne dass ein Eingriff auf die Lenkung erfolgt.

Wird eine Fahrzeugtrajektorie prädiziert, die derjenigen Fahrzeugtrajektorie $T_1$ gemäß Figur 3a entspricht, bei dem sich das Fahrzeug 5 der Betonwand 10 voraussichtlich nähern wird, wird der für die Betonwand 10 bestimmte Schwellwert S um einen Betrag a erhöht und als Eingriffsabstand $S_1$ von der Steuereinheit 8 ausgegeben. Der Abstand des Fahrzeugs 5 gemäß Figur 3a ist nun geringfügig kleiner als dieser Eingriffsabstand $S_1$, infolgedessen bereits in diesem Zustand eine Momentenaufschaltung auf das Lenksystem 9 gemäß der Kurve $M_1$ der Figur 3b erfolgt. Hierzu wird von der Steuereinheit 8 ein Stellglied 12 des Lenksystems 9 des Fahrzeugs 5 angesteuert.

Als Folge hiervon setzt also bereits sehr früh der Momenteneingriff mit einer größeren Eingriffstärke ein im Vergleich mit dem Momentenverlauf $M_0$ bei einer Fahrzeugtrajektorie $T_0$.

Figur 3a zeigt eine weitere Fahrzeugtrajektorie $T_2$, bei der umgekehrt das Fahrzeug 5 voraussichtlich von der Betonwand 10 sich wegbewegt. Als Folge hiervon wird der für die Betonwand 10 bestimmte Schwellwert S um einen Betrag b abgesenkt und als Eingriffsabstand $S_2$ von der Steuereinheit ausgegeben. Damit würde ein Eingriff in das Lenksystem 9 des Fahrzeugs 5 sehr spät, d. h. erst wenn sich das Fahrzeug 5 sehr nahe an der Betonwand 10 bewegen würde, erfolgen.

Damit ergibt sich die Anpassung der für die Betonwand 10 bestimmten Schwelle S aus der zu erwartenden Annäherung oder Entfernung von dieser Betonwand 10. Die zu erwartenden Annäherung oder Entfernung ist abhängig vom Abstand des gewählten Vorausschaupunktes x auf der Fahrzeugtrajektorie T. Es hat sich als vorteilhaft erwiesen, diesen Vorausschaupunkt x nicht fest, bspw. in Metern festzulegen, sondern in Abhängigkeit der Fahrzeuggeschwindigkeit zu wählen oder den Vorausschaupunkt x durch die Festlegung einer Zeitdauer, bspw. 1 Sekunde festzulegen, nach deren Ablauf dieser durch das Fahrzeug 5 erreicht werden soll.

Wie oben bereits ausgeführt, wird der Schwellwert S so bestimmt, dass für den Fahrer ein Fahrschlauch definiert wird, innerhalb dem er das Fahrzeug ohne einen Momenteneingriff führen kann. Falls die Fahrspur zu eng wird, kann das erfindungsgemäße Spurhaltesystem so ausgeführt werden, dass entweder der Fahrer akustisch oder optisch gewarnt wird, oder sich das System selbstständig abschaltet.

In den oben beschriebenen Ausführungsbeispielen wurde das erfindungsgemäße Verfahren beispielhaft im Falle einer Betonwand als Begrenzungsart der Fahrspur angeführt. Der Schwellwert wird in Abhängigkeit der Begrenzungsart der Fahrbahn oder der Fahrspur bestimmt, also ob das die Begrenzung spezifizierende Objekt lediglich eine Fahrbahn- oder Fahrspurmarkierung ist, oder ob ein Fahrbahnrand, bauliche Begrenzungen im Bereich des Fahrbahnrandes und/oder des Fahrspurrandes oder ob Fahrzeuge auf Nachbarfahrspuren der von dem Fahrzeug befahrenen Fahrspur detektiert werden, wobei als bauliche Begrenzungen vor allem Bordsteine, Leitplanken oder Betonwände und dgl. relevant sind.

Ferner wird auch die Eingriffstärke, also der Momentenverlauf in Abhängigkeit der Begrenzungsart der Fahrbahn oder der Fahrspur bestimmt. So ist bspw. die Eingriffsstärke bei einer Linie als Fahrbahn- oder Fahrspurmarkierung geringer als bei einer Baustellenleitwand oder einem Fahrzeug auf einer Nachbarfahrspur, wie dies mit dem Momentenverlauf $M_1$ gemäß Figur 3b dargestellt ist.

Wenn gleichzeitig mehrere Begrenzungsarten an einer Fahrbahn oder Fahrspur detektiert werden, also bspw. sowohl eine Baustellenleitwand und Fahrspurmarkierung, so werden diese hinsichtlich ihrer Kritikalität klassifiziert, so dass dasjenige mit der höchsten Kritikalität zur Bestimmung des Schwellwertes und dessen Momentenverlaufs verwendet wird, in diesem Fall also die Baustellenleitwand.

Schließlich lässt das erfindungsgemäße Spurhaltesystem auch zu, dass der Fahrer Kurven einer Fahrspur schneiden kann, ohne durch einen unnötigen Lenkeingriff gestört zu werden. Hierzu wird bei einer Kurve einer vor dem Fahrzeug liegenden Fahrspur das vom Fahrer des Fahrzeugs zum Befahren dieser Kurve aufzubringende Lenkmoment von dem Lenkmoment abgezogen, mit dem die Lenkung des Fahrzeugs beaufschlagt wird. Fährt der Fahrer mit seinem Fahrzeug in einer Kurve an deren Innenseite, so erhält dieser lediglich ein erhöhtes, jedoch kein volles Gegenmoment auf die Lenkung. Bei Überfahren der kurvenäußeren Spur ergibt sich ein entsprechend höheres Gegenmoment auf die Lenkung, um den Fahrer sicher in der Spur zu halten.

Entsprechend kann bei einer erkannten Einfahrt in eine Kurve der Fahrschlauch, in dem kein Eingriff erfolgt, leicht nach "außen" gelegt werden, bei einer Linkskurve also etwas nach rechts. Hierdurch wird der Fahrer bei einem richtigen Fahrverhalten nicht unnötig durch Eingriffe gestört.

Weiterhin kann der Momenteneingriff abhängig von der Verlässlichkeit der Sensordaten der Kamera 11 erfolgen. Bei hoher Verlässlichkeit kann der Momenteneingriff stärker erfolgen als bei niedriger. Um die Verlässlichkeit der Sensorsignale zu bewerten, können die Größen Objektlebensdauer und Varianz herangezogen werden. Je länger ein Objekt existiert und je geringer seine Varianz ist, desto zuverlässiger ist das Objekt, also die die Begrenzung der Fahrbahn- oder Fahrspur spezifizierenden Objekte.

Um Fehleinregelungen zu verhindern, aber trotzdem einen hohen Verfügbarkeitsbereich sicherzustellen, ist es sinnvoll, den Momenteneingriff bei niedrigen Geschwindigkeiten und hohen Lenkradwinkeln abzuschalten. Sollte das System jedoch in einem höheren Geschwindigkeitsbereich aktiviert worden sein, ist es möglich, die Aktivierung abhängig von der Qualität der Umfelderkennung bis in den Stillstand hinein fortzuführen. Somit würde ein solches System in Verbund mit einem Abstandregelsystem, wie einem Full Speed Range ACC arbeiten können.

Bezugszeichen

| | |
|---|---|
| 1 | Fahrbahn |
| 1a | Fahrspur |
| 2 | Fahrspurmarkierung, Mittelstreifen |
| 3 | Fahrbahnrandmarkierung |
| 4 | Fahrspurmarkierung, Mittelstreifen |
| 5 | Kraftfahrzeug |
| 6 | Fahrspurerfassungssystem |
| 7 | Fahrzeugpositionsbestimmungssystem |
| 8 | Steuereinrichtung |
| 9 | Lenksystem |
| 10 | bauliche Fahrspur- oder Fahrbahnbegrenzung, Baustellenwand, Betonwand |
| 11 | bildgebende Sensoren, Kamera |
| 12 | Stellglied des Lenksystems 9 |

| | |
|---|---|
| $S$ | Schwellwert |
| $S_0$ | Eingriffsabstand |
| $S_1$ | Eingriffsabstand |
| $S_2$ | Eingriffsabstand |

| | |
|---|---|
| $T$ | Fahrzeugtrajektorie |
| $T_0$ | Fahrzeugtrajektorie |
| $T_0$ | Fahrzeugtrajektorie |
| $T_1$ | Fahrzeugtrajektorie |

| | |
|---|---|
| $M_0$ | Momentenverlauf |
| $M_1$ | Momentenverlauf |

**Patentansprüche**

1. Spurhaltesystem für ein Kraftfahrzeug (5), umfassend:

- ein Fahrspurerfassungssystem (6) zum Erfassen und Bestimmen der vor dem Fahrzeug (5) liegenden Fahrspur (1, 1a),
- ein Fahrzeugpositionsbestimmungssystem (7) zur Bestimmung der Fahrzeugtrajektorie ($T$, $T_0$, $T_1$, $T_2$) mittels einer Bewegungsgröße des Fahrzeugs (5),
- eine Steuereinrichtung (8) zur Erzeugung eines das Lenksystem (9) des Kraftfahrzeugs (5) beaufschlagenden Lenkmoments (M) im Sinne einer Spurhaltung,
wobei
- das Fahrspurerfassungssystem (6) zum Erfassen von Fahrbahnrand- und Fahrspurmarkierungen (3, 4), von Fahrbahnrändern, und von den Fahrbahnrand bildenden bauliche Begrenzungen im Bereich des Fahrbahnrandes (10) ausgebildet ist,
- die Steuereinrichtung (8) Vorausschaupunkte (x) auf der Fahrzeugtrajektorie ($T$, $T_0$, $T_1$, $T_2$) erzeugt und in Abhängigkeit der die Umgebungssituation im Bereich der Vorausschaupunkte (x) spezifizierenden Objekte (3, 4, 10) Schwellwerte (S) bestimmt, wobei die spezifizierenden Objekte Fahrbahnrand- und Fahrspurmarkierungen, Fahrbahnränder, und den Fahrbahnrand bildende bauliche Begrenzungen umfassen,
- die Steuereinrichtung (8) einen prädizierten Abstand ($y_{prä}$) bestimmt, der den Abstand des Fahrzeugs in dem Vorausschaupunkt (x) auf der Fahrzeugtrajektorie (T, $T_0$, $T_1$, $T_2$) von dem die Umgebungssituation im Vorausschaupunkt spezifizierenden Objekt (3, 4, 10) angibt,
- die Steuereinrichtung (8) zur Erzeugung eines Eingriffsabstandes ($S_1$, $S_2$) den Schwellwert (S) in Abhängigkeit des prädizierten Abstands ($y_{prä}$) erniedrigt oder erhöht, und der Schwellwert (S) als Eingriffsabstand an die Umgebungssituation, also der Begrenzungssituation der Fahrbahn oder der Fahrspur in einem bestimmten Vorausschaupunkt den spezifizierenden Objekten (3, 4, 10) anpasst, wobei bei einer Baustellenwand der Eingriffsabstand höher angesetzt wird als bei einer üblichen Fahrspurmarkierung
- bei Unterschreiten des Eingriffsabstandes ($S_1$, $S_2$) durch den seitlichen Abstand des Fahrzeugs zu dem die Umgebungssituation spezifizierenden Objekt (3, 4, 10) das Lenksystem (9) mit einem Lenkmoment (M) beaufschlagt wird, wobei die Eingriffsstärke von dem seitlichen Abstand des Fahrzeugs zu dem die Umgebungssituation spezifizierenden Objekt (3, 4, 10) abhängt.

2.  Spurhaltesystem nach Anspruch 1,
    **dadurch gekennzeichnet, dass**
    der Schwellwert (S) zur Erzeugung eines Eingriffsabstandes ($S_1$, $S_2$) erniedrigt bzw. erhöht wird, wenn der prädizierte Abstand ($y_{prä}$) größer bzw. kleiner ist als der aktuelle seitliche Abstand des Fahrzeugs zu einem die Umgebungssituation spezifizierenden Objekt (3, 4, 10).

3.  Spurhaltesystem nach Anspruch 1,
    **dadurch gekennzeichnet, dass**
    die Eingriffstärke des Lenkmoments (M) von dem die Umgebungssituation im Vorausschaupunkt (x) spezifizierenden Objekt (3, 4, 10) abhängt.

4.  Spurhaltesystem nach Anspruch 1 oder 2,
    **dadurch gekennzeichnet, dass**
    die Vorausschaupunkte (x) in Abhängigkeit der Fahrzeuggeschwindigkeit gewählt werden.

5.  Spurhaltesystem nach Anspruch 1 oder 2,
    **dadurch gekennzeichnet, dass**
    als Vorausschaupunkt (x) ein Ort auf der Fahrzeugtrajektorie (T, $T_0$, $T_1$, $T_2$) bestimmt wird, der in einer vorgegebenen Zeitdauer von dem Fahrzeug (5) erreicht sein wird.

6.  Spurhaltesystem nach einem der vorhergehenden Ansprüche, **dadurch gekennzeichnet, dass**
    die die Umgebungssituation im Vorausschaupunkt (x) spezifizierenden Objekte (3, 4, 10) hinsichtlich ihrer Kritikalität klassifiziert werden, so dass bei mehreren solchen Objekten (3, 4, 10) dasjenige mit der höchsten Kritikalität zur Bestimmung des Schwellwertes (S) verwendet wird.

7.  Spurhaltesystem nach einem der vorhergehenden Ansprüche, **dadurch gekennzeichnet, dass**
    das Lenksystem (9) des Fahrzeugs (5) so lange mit dem Lenkmoment (M) beaufschlagt wird, bis der Abstand des Fahrzeugs (5) zu dem die Umgebungssituation im Vorausschaupunkt spezifizierenden Objekt (3, 4, 10) den aktuell bestimmten Eingriffsabstand ($S_1$, $S_2$) überschreitet.

8.  Spurhaltesystem nach einem der vorhergehenden Ansprüche, **dadurch gekennzeichnet, dass**
    bei einer Kurve einer vor dem Fahrzeug (5) liegenden Fahrspur (1, 1a) das vom Fahrer des Fahrzeugs (5) zum Befahren dieser Kurve aufzubringende Lenkmoment von dem Lenkmoment (M) abgezogen wird, mit dem die Lenkung (9) des Fahrzeugs (5) beaufschlagt wird.

9.  Spurhaltesystem nach einem der vorhergehenden Ansprüche, **dadurch gekennzeichnet, dass**
    bei einer Kurve einer vor dem Fahrzeug (5) liegenden Fahrspur (1, 1a) der Schwellwert(S) zur Erzeugung eines Eingriffsabstands ($S_1$, $S_2$) in Richtung der Außenseite der Kurve abgesenkt wird.

10. Spurhaltesystem nach einem der vorhergehenden Ansprüche,
    **dadurch gekennzeichnet, dass**

    - das Spurhaltesystem bildgebende Sensoren (11) zur Erfassung der Umgebung, insbesondere der die Umgebungssituation im Vorausschaupunkt spezifizierenden Objekte (3, 4, 10) aufweist, und
    - die Eingriffsstärke des Lenkmoments (M) von der Verlässlichkeit der Bilddaten der bildgebenden Sensoren (11) abhängt.

**11.** Spurhaltesystem nach Anspruch 10,
**dadurch gekennzeichnet, dass**
die Verlässlichkeit der Bilddaten in Abhängigkeit der Lebensdauer der die Umgebungssituation im Vorausschaupunkt spezifizierenden Objekt (3, 4, 10) und/oder der Varianz der Bilddaten solcher Objekte bestimmt wird.

**12.** Spurhaltesystem nach einem der vorhergehenden Ansprüche,
**dadurch gekennzeichnet, dass**
zur Bestimmung der Fahrzeugtrajektorie ($T$, $T_0$, $T_1$, $T_2$) als Bewegungsgröße des Fahrzeugs (5) der Lenkwinkel verwendet wird.

**13.** Spurhaltesystem nach Anspruch 12,
**dadurch gekennzeichnet, dass**
zur Bestimmung der Fahrzeugtrajektorie ($T$, $T_0$, $T_1$, $T_2$) als Bewegungsgröße des Fahrzeugs (5) zusätzlich die Querbeschleunigung und/oder die Raddrehzahlen und/oder die Sensorsignale eines Gierratensensors verwendet werden.

**Claims**

**1.** A lane keeping system for a motor vehicle (5), comprising:

- a lane detection system (6) for detecting and determining the lane (1, 1a) in front of the vehicle (5),
- a vehicle position determination system (7) for determining the vehicle trajectory ($T$, $T_0$, $T_1$, $T_2$) by means of a motion variable of the vehicle (5),
- a control device (8) for producing a steering torque (M) that acts on the steering system (9) of the motor vehicle (5) for the purpose of lane keeping,
wherein
- the lane detection system (6) is designed to detect roadway edge and lane markings (3, 4), roadway edges and structural boundaries forming the roadway edge in the region of the roadway edge (10),
- the control device (8) produces forecast points (x) on the vehicle trajectory ($T$, To, $T_1$, $T_2$) and determines threshold values (S) as a function of the objects (3, 4, 10) specifying the surroundings situation in the region of the forecast points (x), wherein the specifying objects comprise roadway edge and lane markings, roadway edges and structural boundaries forming the roadway edge,
- the control device (8) determines a predicted distance ($y_{prä}$) which indicates the distance of the vehicle, at the forecast point (x) on the vehicle trajectory ($T$, $T_0$, $T_1$, $T_2$), from the object (3, 4, 10) specifying the surroundings situation at the forecast point,
- the control device (8) for producing an engagement distance ($S_1$, $S_2$) lowers or raises the threshold value (S) as a function of the predicted distance ($y_{prä}$), and the threshold value (S) as the engagement distance is adapted to the object (3, 4, 10) specifying the surroundings situation, that is to say the boundary situation of the roadway or lane at a specific forecast point, wherein the engagement distance is set higher for a building site wall than for a conventional lane marking,
- if the lateral distance of the vehicle from the object (3, 4, 10) specifying the surroundings situation falls below the engagement distance ($S_1$, $S_2$), a steering torque (M) is applied to the steering system (9), wherein the engagement intensity depends on the lateral distance of the vehicle from the object (3, 4, 10) specifying the surroundings situation.

**2.** The lane keeping system according to claim 1, **characterized in that** the threshold value (S) for producing an engagement distance ($S_1$, $S_2$) is lowered or raised if the predicted distance ($y_{prä}$) is respectively greater than or less than the current lateral distance of the vehicle from an object (3, 4, 10) specifying the surroundings situation.

**3.** The lane keeping system according to claim 1, **characterized in that** the engagement intensity of the steering torque (M) depends on the object (3, 4, 10) specifying the surroundings situation at the forecast point (x).

**4.** The lane keeping system according to claim 1 or 2, **characterized in that** the forecast points (x) are selected as a function of the vehicle speed.

**5.** The lane keeping system according to claim 1 or 2, **characterized in that** a location on the vehicle trajectory ($T$, To, $T_1$, $T_2$) which will be reached by the vehicle (5) in a predefined length of time is determined as the forecast point (x).

6. The lane keeping system according to any of the preceding claims, **characterized in that** the objects (3, 4, 10) specifying the surroundings situation at the forecast point (x) are classified in terms of their criticality so that, if there is a plurality of such objects (3, 4, 10), the one with the highest criticality is used to determine the threshold value (S).

7. The lane keeping system according to any of the preceding claims, **characterized in that** the steering torque (M) is applied to the steering system (9) of the vehicle (5) until the distance of the vehicle (5) from the object (3, 4, 10) specifying the surroundings situation at the forecast point exceeds the currently determined engagement distance $(S_1, S_2)$.

8. The lane keeping system according to any of the preceding claims, **characterized in that**, if there is a bend in a lane (1, 1a) in front of the vehicle (5), the steering torque to be applied by the driver of the vehicle (5) in order to navigate this bend is subtracted from the steering torque (M) that is applied to the steering system (9) of the vehicle (5).

9. The lane keeping system according to any of the preceding claims, **characterized in that**, if there is a bend in a lane (1, 1a) in front of the vehicle (5), the threshold value (S) for producing an engagement distance $(S_1, S_2)$ in the direction of the outside of the bend is lowered.

10. The lane keeping system according to any of the preceding claims, **characterized in that**

   - the lane keeping system comprises imaging sensors (11) for detecting the surroundings, in particular the objects (3, 4, 10) specifying the surroundings situation at the forecast point, and
   - the engagement intensity of the steering torque (M) depends on the reliability of the image data from the imaging sensors (11).

11. The lane keeping system according to claim 10, **characterized in that** the reliability of the image data is determined as a function of the life span of the object (3, 4, 10) specifying the surroundings situation at the forecast point and/or of the variance of the image data of such objects.

12. The lane keeping system according to any of the preceding claims, **characterized in that**, for determining the vehicle trajectory $(T, T_0, T_1, T_2)$, the steering angle is used as the motion variable of the vehicle (5).

13. The lane keeping system according to claim 12, **characterized in that**, for determining the vehicle trajectory $(T, T_0, T_1, T_2)$, the transverse acceleration and/or the wheel rotational speeds and/or the sensor signals from a yaw rate sensor are additionally used as the motion variable of the vehicle (5).

**Revendications**

1. Système de maintien de trajectoire pour un véhicule automobile (5), comprenant :

   - un système de détection de voie (6) pour la détection et la détermination de la voie (1, 1a) située devant le véhicule (5),
   - un système de détermination de la position de véhicule (7) pour la détermination de la trajectoire du véhicule $(T, T_0, T_1, T_2)$ au moyen d'une grandeur de déplacement du véhicule (5),
   - un dispositif de commande (8) pour la production d'un couple de direction (M) sollicitant le système de direction (9) du véhicule automobile (5) dans le sens d'un maintien de trajectoire,
   - le système de détection de voie (6) étant constitué pour la détection de marquages de voie et de bord de chaussée (3, 4), de bords de chaussée et de délimitations constructives formant le bord de chaussée dans la zone du bord de chaussée (10),
   - le dispositif de commande (8) produisant des points de prévision (x) sur la trajectoire du véhicule $(T, T_0, T_1, T_2)$ et déterminant des valeurs de seuil (S) en fonction des objets (3, 4, 10) spécifiant la situation environnante dans la zone des points de prévision (x), les objets de spécification comprenant des marquages de voie et de bord de chaussée, des bords de chaussée et des délimitations constructives formant le bord de chaussée,
   - le dispositif de commande (8) déterminant une distance prévue $(Y_{prä})$ qui indique la distance séparant le véhicule au niveau du point de prévision (x) sur la trajectoire du véhicule $(T, T_0, T_1, T_2)$ et l'objet (3, 4, 10) spécifiant la situation environnante au niveau du point de prévision,
   - le dispositif de commande (8) destiné à la production d'une distance d'intervention $(S_1, S_2)$ abaissant ou relevant la valeur de seuil (S) en fonction de la distance prévue $(Y_{prä})$, et la valeur de seuil (S) étant adaptée, en tant que distance d'intervention, aux objets (3, 4, 10) spécifiant la situation environnante, donc à la situation de délimitation de la chaussée ou de la voie au niveau d'un point de prévision déterminé de spécification, la distance d'intervention étant, en présence d'une paroi de chantier, placée plus haut que pour un marquage de voie habituel,

- le système de direction (9) étant sollicité avec un couple de direction (M) en cas de passage au-dessous de la distance d'intervention ($S_1$, $S_2$) par la distance latérale entre le véhicule et l'objet (3, 4, 10) spécifiant la situation environnante, la force d'intervention dépendant de la distance latérale séparant le véhicule et l'objet (3, 4, 10) spécifiant la situation environnante.

2. Système de maintien de trajectoire selon la revendication 1,
   **caractérisé en ce que**
   la valeur de seuil (S) destinée à la production d'une distance d'intervention ($S_1$, $S_2$) est abaissée ou respectivement relevée si la distance prévue ($Y_{prä}$) est plus grande ou plus faible que la distance latérale actuelle séparant le véhicule et un objet (3, 4, 10) spécifiant la situation environnante.

3. Système de maintien de trajectoire selon la revendication 1,
   **caractérisé en ce que**
   la force d'intervention du couple de direction (M) dépend de l'objet (3, 4, 10) spécifiant la situation environnante au niveau du point de prévision (x).

4. Système de maintien de trajectoire selon la revendication 1 ou 2,
   **caractérisé en ce que**
   les points de prévision (x) sont choisis en fonction de la vitesse du véhicule.

5. Système de maintien de trajectoire selon la revendication 1 ou 2,
   **caractérisé en ce que**,
   en tant que point de prévision (x), il est déterminé un endroit sur la trajectoire du véhicule (T, $T_0$, $T_1$, $T_2$) qui sera atteint par le véhicule (5) à l'intérieur d'une durée prédéfinie.

6. Système de maintien de trajectoire selon une des revendications précédentes,
   **caractérisé en ce que**
   les objets (3, 4, 10) spécifiant la situation environnante au niveau du point de prévision (x) sont classés au regard de leur criticité de telle sorte que, en présence de plusieurs objets (3, 4, 10) de ce genre, celui ayant la criticité la plus élevée est utilisé pour la détermination de la valeur de seuil (S).

7. Système de maintien de trajectoire selon une des revendications précédentes,
   **caractérisé en ce que**
   le système de direction (9) du véhicule (5) est sollicité avec le couple de direction (M) jusqu'à ce que la distance séparant le véhicule (5) et l'objet (3, 4, 10) spécifiant la situation environnante au niveau du point de prévision (x) passe au-dessus de la distance d'intervention ($S_1$, $S_2$) déterminée à ce moment-là.

8. Système de maintien de trajectoire selon une des revendications précédentes,
   **caractérisé en ce que**,
   en présence d'un virage d'une voie (1, 1a) située devant le véhicule (5), le couple de direction devant être appliqué par le conducteur du véhicule (5) pour franchir ce virage est soustrait du couple de direction (M) avec lequel est sollicitée la direction (9) du véhicule (5).

9. Système de maintien de trajectoire selon une des revendications précédentes,
   **caractérisé en ce que**,
   en présence d'un virage d'une voie (1, 1 a) située devant le véhicule (5), la valeur de seuil (S) destinée à la production d'une distance d'intervention ($S_1$, $S_2$) est abaissée en direction du côté extérieur du virage.

10. Système de maintien de trajectoire selon une des revendications précédentes,
    **caractérisé en ce que**

    - le système de maintien de trajectoire présente des capteurs (11) d'imagerie destinés à la détection de l'environnement, en particulier des objets (3, 4, 10) spécifiant la situation environnante au niveau du point de prévision, et

- la force d'intervention du couple de direction (M) dépend de la fiabilité des images des capteurs (11) d'imagerie.

11. Système de maintien de trajectoire selon la revendication 10,
   **caractérisé en ce que**
   la fiabilité des images est déterminée en fonction de la durée de vie des objets (3, 4, 10) spécifiant la situation environnante au niveau du point de prévision et/ou en fonction de la variance des images de tels objets.

12. Système de maintien de trajectoire selon une des revendications précédentes,
   **caractérisé en ce que**
   l'angle de braquage est utilisé pour la détermination de la trajectoire du véhicule ($T$, $T_0$, $T_1$, $T_2$) en tant que grandeur de déplacement du véhicule (5).

13. Système de maintien de trajectoire selon la revendication 12,
   **caractérisé en ce que**,
   pour la détermination de la trajectoire du véhicule ($T$, $T_0$, $T_1$, $T_2$), on utilise en plus en tant que grandeur de déplacement du véhicule (5) l'accélération transversale et/ou les vitesses de rotation de roues et/ou les signaux de capteur d'un capteur de taux d'embardée.

FIG.1

FIG.2

FIG. 3a

FIG. 3b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10137292 A1
- US 20050228588 A1